# EUROPÄISCHE PATENTSCHRIFT

(11) **EP 0 645 832 B1**
(45) Veröffentlichungstag und Bekanntmachung des Hinweises auf die Patenterteilung: **16.10.1996**
(21) Anmeldenummer: 94108213.3
(22) Anmeldetag: 28.05.1994
(51) Int. Cl.: H01M 4/24, H01M 10/52, H01M 4/26, H01M 10/34

(54) **Negative Elektrode für gasdichte alkalische Akkumulatoren, die eine Russ enthaltende Gasverzehrschicht besitzt**
Negative electrode for gas tight alkaline accumulators, having a gas consuming layer comprising carbon black
Electrode négative pour accumulateurs alcalins étanches ou gaz pourvue une couche contenant de noir de carbone pour la consommation des gaz

(30) Priorität: 11.08.1993 DE 4326944
(43) Veröffentlichungstag der Anmeldung: 29.03.1995
(73) Patentinhaber: VARTA Batterie Aktiengesellschaft, 30419 Hannover (DE)
(72) Erfinder: Klaus, Christoph, D-65195 Wiesbaden (DE)
(74) Vertreter: Kaiser, Dieter Ralf, Dipl.-Ing.

(56) Entgegenhaltungen:
- EP-A- 0 174 526
- EP-A- 0 218 028
- GB-A- 2 084 388
- PATENT ABSTRACTS OF JAPAN vol. 12, no. 7 (E-571) & JP-A-62 165 860 (JAPAN STORAGE BATTERY CO. LTD.)
- PATENT ABSTRACTS OF JAPAN vol. 11, no. 46 (E-479) & JP-A-61 208 755 (SANYO ELECTRIC CO. LTD.)
- PATENT ABSTRACTS OF JAPAN vol. 10, no. 117 (E-400) & JP-A-60 250 567 (YUASA DENCHI KK)
- PATENT ABSTRACTS OF JAPAN vol. 8, no. 25 (E-225) & JP-A-58 186 164 (MATSUSHITA DENKI SANGYO KK)
- PATENT ABSTRACTS OF JAPAN vol. 12, no. 7 (E-571) & JP-A-62 165 860
- PATENT ABSTRACTS OF JAPAN vol. 11, no. 46 (E-479) & JP-A-61 208 755
- PATENT ABSTRACTS OF JAPAN vol. 10, no. 117 (E-400) & JP-A-60 250 567
- PATENT ABSTRACTS OF JAPAN vol. 8, no. 25 (E-225) & JP-A-58 186 164

## Beschreibung

Die Erfindung betrifft eine negative Elektrode für gasdichte alkalische Akkumulatoren, die eine Ruß enthaltende Gasverzehrschicht besitzt.

Um gasdichte Akkumulatoren dieser Systeme mit möglichst hohen Strömen laden zu können, sind deren negative Elektroden zur Beschleunigung des Sauerstoffverzehrs häufig mit Hilfselektroden aus einem katalytisch aktiven Material versehen, die sich durch elektrische Parallelschaltung auf dem gleichen Potential wie die negative Hauptelektrode befinden.

Gemäß DE-OS-3534758 besteht eine solche Elektrodenanordnung in einer Ni/Cd-Knopfzelle z.B. aus der in ein Nickeldrahtgewebekörbchen eingepreßten negativen Elektrode in Tablettenform und einer kohlehaltigen Mischung aus Aktivkohle, Leitruß und PTFE als Bindemittel, die in das Nickeldrahtgewebematerial des Körbchendeckels eingewalzt ist. Aus der DE-OS 34 33 544 ist es auch bekannt, eine negative Cadmiumelektrode mit einem katalytisch wirksamen Kohlematerial unmittelbar trocken zu beschichten. Die Elektrode wird vor der trockenen Aufbringung des Kohlematerials, z.B. durch Einpudern, mit einer Dispersion eines wasserlöslichen Celluloseethers (Handelsname: Tylose) befeuchtet. Derartige Celluloseether wie Methylcellulosen oder Carboxymethylcellulosen, die allgemein als Verdicker, Binde- und Suspendiermittel Anwendung finden, wirken in diesem Fall hauptsächlich als Kleber.

Bei einer Trockenbeschichtung können jedoch Nachteile dadurch entstehen, daß zum einen nur die äußere Elektrodenfläche und nicht die inneren Poren beschichtet werden, zum anderen Ungleichmäßigkeiten in der Beschichtungsdicke vorhanden sind, die dazu führen, daß die Elektrolytabsorption der negativen Elektrode beeinträchtigt wird; hierdurch werden lange Standzeiten der Zelle bei der Herstellung erforderlich.

Nasse Beschichtungen auf Basis wäßriger Dispersionen haben wiederum wenig befriedigt, weil im Laufe des zyklischen Lade-/Entladebetriebes die Beschichtung einen Teil des hydrophoben Charakters verliert. Dies führt zu einer Verschlechterung der Gasverzehrkinetik, die unabdingbar an den Erhalt von Dreiphasengrenzschichten aus elektrisch leitender Feststoffoberfläche, Gasphase und dem flüssigen Elektrolyten gebunden ist. Als Folge stellt sich ein hoher Zellinnendruck ein, der zur Verkürzung der Lebensdauer der Zelle beiträgt. Ein weiterer Nachteil bisher verwendeter wäßriger Dispersionen besteht darin, daß sie zur Entmischung und Trennung der Kohlenstoff- und der PTFE-Komponente neigen.

Der Erfindung liegt daher die Aufgabe zugrunde, eine negative Elektrode für insbesondere gasdichte NiCd- und NiH - Zellen verfügbar zu machen, die zur katalytischen Sauerstoffrekombination mit Ruß oberflächenbeschichtet ist, wobei das Material für die Rußauftragung leicht und gleichmäßig auf die negative Elektrode aufziehen und unter den Bedingungen des Batteriebetriebes eine lange Wirkungsdauer besitzen soll.

Die Aufgabe wird erfindungsgemäß mit einer Elektrode gelöst, wie sie im Anspruch 1 definiert ist.

Danach ist der Rußanteil der Schicht aus einer Dispersion gebildet, die das Mischungsprodukt aus zwei wäßrigen Dispersionen darstellt, von denen die eine einen Rußgehalt von 1 bis 20 %, vorzugsweise 0,5 bis 5 %, beispielsweise ca. 2 %, nebst einem Emulgatorzusatz aus einem kationischen, anionischen oder nichtionischen Tensid aufweist und die andere eine PTFE - Dispersion mit 1 bis 60 % PTFE, vorzugsweise 2 bis 20 %, beispielsweise ca. 10 %, ist und ebenfalls einen Emulgator enthält. Erfindungsgemäß sind die Emulgatoren in den beiden Mischungskomponenten bezüglich ihrer lonenaktivität vom gleichen Typ, d.h. beide entweder nur kationisch oder nur anionisch bzw. nichtionisch. Der in der ersten Mischungskomponente eingesetzte Ruß hat erfindungsgemäß eine BET-Oberfläche von 200-2000m²/g bei einer Primärpartikelgröße von 0,001 bis 0,1 µm, vorzugsweise 0,01 bis 0,07 µm, beispielsweise ca. 0,05 µm. Ein gut geeignetes Rußprodukt ist z.B. unter dem Handelsnamen Akzo Ketjenblack ED 310 erhältlich.

Das für die zweite Mischungskomponente verwendete PTFE sollte dagegen eine Primärpartikelgröße von 0,01 bis 0,5 µm, vorzugsweise 0,05 bis 0,2 µm, beispielsweise ca. 0,1 µm, besitzen. Geeignete Produkte tragen den Namen Hoechst PTFE 5032 oder DuPont Teflon N30.

Beim Mischen dieser beiden Dispersionen darf keine Ausflockung oder Koagulation auftreten. Erfindungsgemäß wird dies dadurch erreicht, daß sowohl die Ruß- als auch die PTFE-Dispersion mit einem Tensid vom gleichen lonentyp stabilisiert sind. Außerdem erhöht ein Abpuffern beider Dispersionen bei gleichem pH-Wert die Langzeitstabilität der fertigen Mischung deutlich. Zur gleichenmäßigen Auftragung der erfindungsgemäßen Rußdispersion auf die negative Elektrode ist es von Vorteil, eine bestimmte Dispersionsviskosität einzustellen. Diesem Zweck dienen bei bekannten Gasverzehrdispersionen meist die weiter oben bereits erwähnten Methylcellulosen. Mit ihrer günstigen Eigenschaften als hydrophile Kolloide, die wäßrige Dispersion beständiger zu machen und insbesondere gegenüber dem PTFE wie ein Schutzkolloid zu wirken, tragen diese Zusätze jedoch zu einem Hydrophobitätsverlust der Elektrode bei.

Es wurde gefunden, daß dieser Mangel durch andere verdickend wirkende Polymere, die sich nicht wie Schutzkolloide verhalten, behoben werden kann. Sehr vorteilhaft zur Einstellung der Dispersionsviskosität ist erfindungsgemäß der Zusatz von Polyacrylsäureester, z.B. ein Produkt mit dem Handelsnamen Akzo Carbopol 941.

Das Mischen der beschriebenen Dispersionen einschließlich Verdicker kann im Gegensatz zu trockenen Mischungen sehr einfach durch ein beliebiges Rührwerkzeug wie auch durch Taumel- oder Drehbewegung des Mischgefäßes erreicht werden. Hohe Schwerkräfte wie auch lange Mischzeiten sind nicht erforderlich. Die erzeugte Dispersion zeichnet sich durch hervorragende Langzeitstabilität aus, und es tritt weder eine Koagulation noch eine Entmischung auf. Damit ist eine wesentliche verfahrenstechnische Vereinfachung bei der Beschichtung der Elektrode gegeben.

Die Stabilität der erfindungsgemäßen Dispersion steht in enger Beziehung zu Größe und Struktur ihrer Teilchen:
Beim Mischen ziehen die zumeist in Aggregaten mit Durchmessern zwischen 0,02 und 0,2µm vorliegenden Rußteilchen auf die Oberfläche der diskreten kugeligen PTFE-Teilchen auf und zerfallen dabei in zahlreiche kleinere Primärteilchen oder Filamente, deren Größe zwischen 0,001 und 0,1 µm schwankt. Sie "verschmieren" quasi um das PTFE-Teilchen herum und umhüllen dieses wie eine Kugelschale. Letztere ist aber nicht geschlossen, sondern von vielen Spaltrissen durchbrochen und damit hochporös. Sie bleibt an der PTFE-Oberfläche fest gebunden, so daß eine Doppelschicht aus hydrophobem inneren PTFE und äußerem Kohlenstoff mit hoher katalytischer Oberfläche entsteht.

Neben diesen kugeligen Teilchen sind für die erfindungsgemäße Dispersion auch beerenartig geformte Teilchen charakteristisch. Sie entstehen durch Zusammenballung von wenigen PTFE-Teilchen mit gleichvielen und etwa gleichgroßen Kohlenstoffteilchen, welche jedoch Agglomerate von Primärteilchen darstellen.

Anhand von zwei Figuren werden die beiden typischen Teilchenformen der erfindungsgemäßen Dispersion veranschaulicht.

Figur 1 zeigt ein sphärisches PTFE-C-Teilchen.

Figur 2 zeigt ein beerenförmiges PTFE-C-Teilchen.

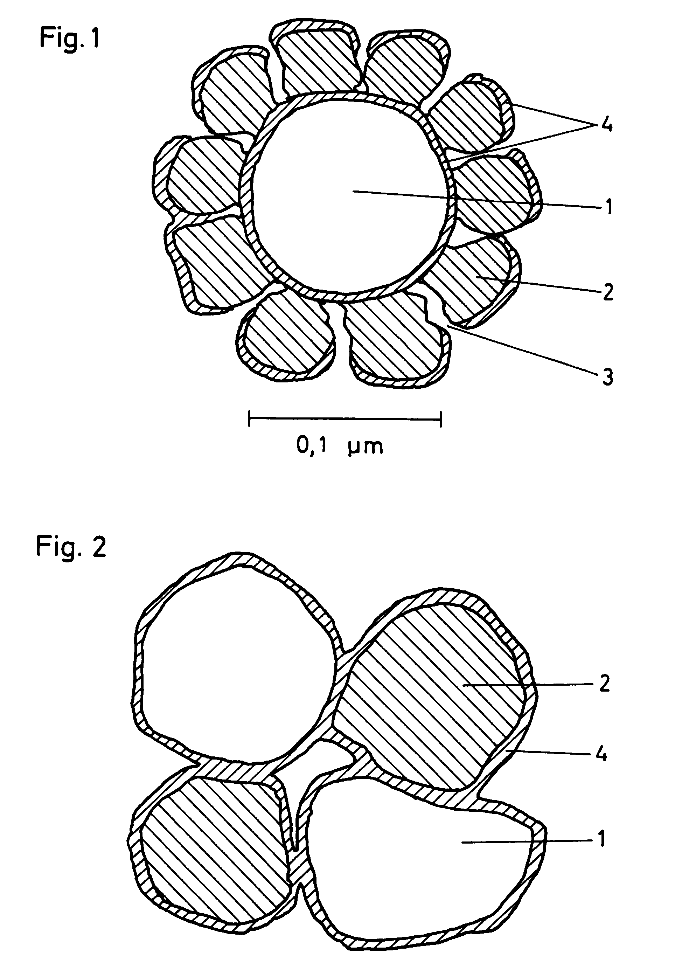

Nach Fig.1 ist das diskrete PTFE-Partikel 1 von vielen kleineren C-Primärteilchen 2 umgeben, die aus dem Zerfall größerer Aggregate während des Mischens hervorgegangen sind. Der Durchmesser des PTFE-Teilchens beträgt beispielsweise 0,1µm, der Durchmesser des C-Primärteilchens 0,05µm, so daß sich ein Gesamtdurchmesser des PTFE-C-Partikels von 0,2-0,3µm, abhängig von der Konzentration der C-Teilchen in der sphärischen Hülle ergibt.

Auch bei steigender Zumischung von Kohlenstoff bleibt die kugelige Schicht von genügend Poren und Spaltrissen 3 durchsetzt, so daß unter dem hydrophobierenden Einfluß des PTFE-Kernes ein Zutritt des Sauerstoffs zu den Kohlpartikeln stets gewährleistet bleibt.

Da der PTFE-Kern und die Kohlenstoffhülle ferner eine Tensidschicht 4 zwischen sich einschließen und die Kohlenstoffhülle nochmals eine äußere Tensidschicht aufweist, ist dem "Primärpartikel" der erfindungsgemäßen Dispersion eine Art Sandwich-Struktur eigentümlich. Wie rasterelektronenmikroskopisch nachgewiesen wurde, kann die Morphologie dieser Sandwich-Mikroaggregate von unregelmäßigen Formen bis zu - hier ideal dargestellt - sphärischen Partikel gehen.

Die ebenfalls unter dem Rasterelektronenmikroskop zu beobachtende beerenartige Form erfindungsgemäßer "Primärpartikel" gemäß Fig.2 weist im allgemeinen 2 bis 3 PTFE-Teilchen und ebensoviele Kohlenstoffteilchen einschließlich deren Tensid-Belegungen auf. Die Größe dieser Teilchen übertrifft diejenige der "Primärpartikel" von Fig.1 im allgemeinen nicht wesentlich.

Die Vorteile der erfindungsgemäßen Gasverzehr-Dispersion lassen sich wie folgt zusammenfassen:
Die Dispersion erweist sich als sehr stabil. Die diskreten Einzelpartikel zeigen keine Neigung zur Agglomeration. Sie ermöglicht sowohl eine nachträgliche Beschichtung eines fertigen Elektrodenbandes (z.B. hergestellt nach dem Electro-deposit-Verfahren gemäß DE-PS 28 22 821) als auch einen homogenen Zusatz zur Aktivmassenpaste für die Pastierung von Einzelelektroden. Sie erreicht nicht nur die äußere geometrische Elektrodenoberfläche, sondern auch, bedingt durch die geringe Größe der Sandwich-Partikel, die inneren Poren der Elektrode, so daß die beschichtete, katalytisch wirksame Oberfläche deutlich vergrößert wird.

Als Beschichtungsverfahren kommen Tauchen, Düsenbeschichtung oder Sprühen infrage, wobei in jedem Falle frei und sehr gleichmäßig einstellbare, reproduzierbare Schichtdicken erreicht werden können.

Die mit der erfindungsgemäßen Dispersion beschichtete Elektrode zeichnet sich aufgrund der Mikrodispersität des Systems und des innigen Kontakts von Kohlenstoff und PTFE-Träger durch Dauerhaftigkeit des hydrophoben Charakters und damit auch durch eine langzeitstabile Gasverzehrkinetik aus.

Durch Austausch der üblichen Methylcellulose-Verdicker gegen andere viskositätserhöhende Polymere, die jedoch nicht als Schutzkolloide wirken, können die Gasverzehreigenschaften deutlich verbessert werden.

Durch die nasse Beschichtung der negativen Elektrode mit der erfindungsgemäßen Dispersion wird im Gegensatz zu einer trockenen Beschichtung die Elektrolytaufnahme einer Zelle deutlich verbessert, so daß kürzere Standzeiten bei der Elektrolytdosierung und damit eine schnellere und effizientere Zellherstellung möglich sind. Eine Zelle mit einer so beschichteten Elektrode weist eine deutliche Verbesserung der Schnellade- und Überladefähigkeit, auch noch nach hohen Zyklenzahlen auf; dies äußert sich auch in einer deutlich erhöhten Lebensdauer.
Dieselbe Zelle zeigt auch nach hohen Zyklenzahlen eine kaum veränderte Ladekennlinie, so daß eine Abschaltung bei Überladung auch nach langer Betriebsdauer durch ein Spannungsdifferenz-Signal möglich ist.

## Patentansprüche

1. Negative Elektrode für gasdichte alkalische Akkumulatoren, die eine Ruß enthaltende Gasverzehrschicht besitzt, dadurch gekennzeichnet, daß der Rußanteil durch Mischen einer wäßrigen Rußdispersion mit einer wäßrigen PTFE-Dispersion hergestellt ist, wobei ein als Emulgator in beiden Dispersionen eingesetztes Tensid einheitlich entweder vom kationischen, anionischen oder nichtionischen Typ ist.

2. Negative Elektrode nach Anspruch 1, dadurch gekennzeichnet, daß der Rußanteil zur Viskositätseinstellung Polyacrylsäureester als Verdickungsmittel enthält.

3. Negative Elektrode nach Anspruch 1 oder 2, dadurch gekennzeichnet, daß der Rußgehalt der ersten Mischungskomponente 1 bis 20 % und der PTFE-Gehalt der zweiten Mischungskomponente 1 bis 60 % beträgt.

4. Negative Elektrode nach Anspruch 3, dadurch gekennzeichnet, daß der Rußgehalt der ersten Mischungskomponente 0,5 bis 5 % und der PTFE-Gehalt der zweiten Mischungskomponente 2 bis 20 % beträgt.

5. Negative Elektrode nach einem der Ansprüche 1 bis 4, dadurch gekennzeichnet, daß die Primärpartikelgröße des eingesetzten Rußes bei einer BET-Oberfläche von 200 bis 2000m²/g 0,001 bis 0,1µm und die Primärpartikelgröße des eingesetzten PTFE 0,01 bis 0,5µm beträgt.

6. Negative Elektrode nach Anspruch 5, dadurch gekennzeichnet, daß die Primärpartikelgröße des Rußes 0,01 bis 0,07 µm und die Primärpartikelgröße des PTFE 0,05 bis 0,2 µm beträgt.

7. Verfahren zur Herstellung einer negativen Elektrode nach einem oder mehreren der Ansprüche 1 bis 6, dadurch gekennzeichnet, daß die Mischung aus einer Rußdispersion und einer PTFE - Dispersion und gegebenenfalls einem Verdickungsmittel auf die Elektrodenoberfläche aufgebracht wird.

8. Verfahren nach Anspruch 7, dadurch gekennzeichnet, daß die Mischung durch Tauchen oder Aufsprühen aufgebracht wird.

## Claims

1. A negative electrode for gas-tight alkaline storage batteries which has a gas consuming layer containing carbon black, characterised in that the carbon black constituent is produced by mixing an aqueous carbon black dispersion with an aqueous PTFE dispersion, a surfactant used as an emulsifier in both dispersions being uniformly of the cationic, anionic or non-ionic type.

2. A negative electrode according to claim 1, characterised in that the carbon black constituent contains polyacrylic acid esters as a thickener to adjust viscosity.

3. A negative electrode according to claim 1 or 2, characterised in that the carbon black content of the first component of the mixture is 1 to 20% and the PTFE content of the second component of the mixture is 1 to 60%.

4. A negative electrode according to claim 3, characterised in that carbon black content of the first component of the mixture is 0.5 to 5% and the PTFE content of the second component of the mixture is 2 to 20%.

5. A negative electrode according to one of claims 1 to 4, characterised in that the primary particle size of the carbon black used is 0.001 to 0.1 µm at a BET surface area of 200 to 2000 m²/g and the primary particle size of the PTFE used is 0.01 to 0.5 µm.

6. A negative electrode according to claim 5, characterised in that the primary particle size of the carbon black is 0.01 to 0.07 µm and the primary particle size of the PTFE is 0.05 to 0.2 µm.

7. A process for the production of a negative electrode according to one or more of claims 1 to 6, characterised in that the mixture prepared from a carbon black dispersion and a PTFE dispersion and optionally a thickener is applied onto the surface of the electrode.

8. A process according to claim 7, characterised in that the mixture is applied by dipping or spraying.

## Revendications

1. Electrode négative pour des accumulateurs alcalins étanches aux gaz, qui possède une couche de consommation des gaz contenant du noir de carbone, caractérisée en ce que la part du noir de carbone est réalisée en mélangeant une dispersion aqueuse de noir de carbone avec une dispersion aqueuse de polytétrafluoréthylène, un agent tensioactif, mis dans les deux dispersions en tant qu'émulsifiant, étant unitairement soit de type cationique, soit de type anionique, soit de type non ionique.

2. Electrode négative selon la revendication 1 ou 2, caractérisée en ce que la part du noir de carbone servant à régler la viscosité contient un polyester acrylique comme agent épaississant.

3. Electrode négative selon la revendication 1 ou 2, caractérisée en ce que la teneur en noir de carbone du premier composant du mélange atteint 1 à 20 % et la teneur en polytétrafluoréthylène du second composant du mélange atteint 1 à 60 %.

4. Electrode négative selon la revendication 3, caractérisée en ce que la teneur en noir de carbone du premier composant du mélange atteint 0,5 à 5 % et la teneur en polytétrafluoréthylène du second composant du mélange atteint 2à 20 %.

5. Electrode négative selon l'une des revendications 1 à 4, caractérisée en ce que la grandeur des particules primaires du noir de carbone mis dans le mélange atteint dans le cas d'une surface BET de 200 à 2000 m²/g 0,001 à 0,1 µm et la grandeur des particules primaires du polytétrafluoréthylène atteint 0,01 à 0,5 µm.

6. Electrode négative selon la revendication 5, caractérisée en ce que la grandeur des particules primaires du noir de carbone atteint 0,01 à 0,07 µm et la grandeur des particules primaires du polytétrafluoréthylène atteint 0,05 à 0,2 µm.

7. Procédé de fabrication d'une électrode négative selon une ou plusieurs des revendications 1 à 6, caractérisé en ce que le mélange qui consiste en une dispersion de noir de carbone et une dispersion de polytétrafluoréthylène et le cas échéant un agent épaississant est mis sur la surface de l'électrode.

8. Procédé selon la revendication 7, caractérisé en ce que le mélange est mis par immersion ou pulvérisation.
